# EUROPÄISCHE PATENTSCHRIFT

(11) **EP 1 796 862 B1**
(45) Veröffentlichungstag und Bekanntmachung des Hinweises auf die Patenterteilung: **19.03.2008**
(21) Anmeldenummer: 04765621.0
(22) Anmeldetag: 25.09.2004
(51) Int. Cl.: B23F 9/10, B23F 9/12, B23F 9/02, B23F 5/20

(54) **VORRICHTUNG UND VERFAHREN ZUM BEARBEITEN VON ZAHNRÄDERN IM TEILENDEN VERFAHREN MIT VERKÜRZTER TEILZEIT**
DEVICE AND METHOD FOR MACHINING GEAR WHEELS IN A DIVISION METHOD WITH A REDUCED DIVISION TIME
DISPOSITIF ET PROCEDE POUR USINER DES ROUES DENTEES DANS LE CADRE DU PROCEDE DE DIVISION, AVEC UN TEMPS DE DIVISION REDUIT

(43) Veröffentlichungstag der Anmeldung: 20.06.2007
(73) Patentinhaber: Klingelnberg GmbH, 42499 Hückeswagen (DE)
(72) Erfinder: GUMPL, Jürgen, 76275 Ettlingen (DE); DUTSCHK, Roland, 01187 Dresden (DE); KIRSCH, Roger, 76307 Karlsbad (DE)
(74) Vertreter: OK pat AG
(86) Internationale Anmeldenummer: PCT/EP2004/010791
(87) Internationale Veröffentlichungsnummer: WO 2006/032296

(56) Entgegenhaltungen:
- GB-A- 972 365
- US-A- 3 534 655
- US-A- 5 800 103

## Beschreibung

Die Erfindung betrifft Vorrichtungen zum Bearbeiten von Zahnrädern im teilenden Verfahren und Verfahren zur teilenden Bearbeitung von Zahnrädern. Siehe, zum Beispiel, US 5, 800, 103.

### Stand der Technik

Es gibt verschiedene Vorrichtungen, wie zum Beispiel Zahnradfräsmaschinen oder Zahnradschleifmaschinen, die speziell zum Bearbeiten von Zahnrädern ausgelegt sind. Wie die Namen dieser Maschinen bereits andeuten, arbeitet der erste Maschinentyp mit Fräswerkzeugen und der zweite Maschinentyp mit Schleifwerkzeugen.

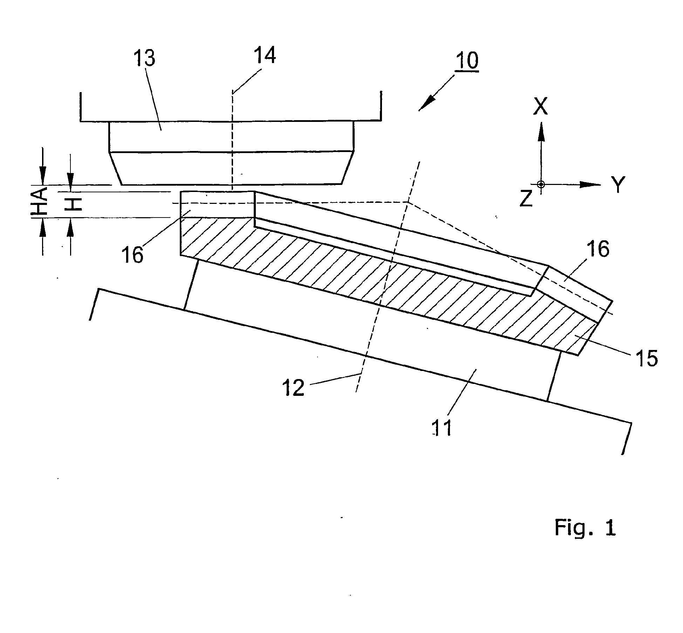

Man unterscheidet im Wesentlichen zwischen Maschinen, die im teilenden Verfahren arbeiten und Maschinen, die kontinuierlich arbeiten. Beim teilenden Verfahren wird eine Zahnlücke bearbeitet, dann erfolgt eine relative Verschiebungsbewegung zum Herausfahren des Werkzeugs aus einer Zahnlücke und eine sogenannte Teilungsbewegung (Teilungsdrehung), bei der sich das Zahnrad relativ zum Werkzeug dreht bevor dann die nächste Zahnlücke bearbeitet wird. Es wird somit Schritt für Schritt ein Zahnrad gefertigt. Typischerweise ist eine Verzahnungsmaschine 10, wie in Fig. 1 angedeutet, die im teilenden Verfahren arbeitet, mit einem Teilapparat versehen, der das Werkstück 15 mit Zähnen 16 in dem Moment um eine oder mehrere Teilungen um die Werkstückachse 12 verdreht, in dem das Werkzeug 13 ausser Eingriff steht. Um sicher zu stellen, dass das Werkzeug 13 (im vorliegenden Fall eine Schleifscheibe, die in Fig. 1 schematisch angedeutet ist) ausser Eingriff ist, wird eine relative Bewegung ausgeführt, bei der das Werkzeug 13 parallel zur Werkzeugachse 14 (parallel zur x-Achse) aus der Zahnlücke heraus bewegt wird. Wenn der Zahn 16 eine Zahnhöhe H hat, so muss das Werkzeug 13 um eine Strecke HA bewegt werden, um sicher zu stellen, dass es beim Ausführen der Teilungsdrehung keine Kollision zwischen dem Werkzeug 13 und einem der Zähne 15 gibt.

Die einzelnen Bewegungsabläufe bei solchen Maschinen 10 sind mechanisch miteinander koordiniert und es kommen Antriebe zum Einsatz die Motordrehungen mittels Schnecken und anderen Mitteln auf das zu bearbeitende Werkstück 15 und das Werkzeug 13 übertragen.

Bei moderneren Maschinen wird statt dem Teilapparat eine CNC Steuerung eingesetzt, die so ausgelegt ist, dass die Teilungsbewegung im geeigneten Moment aufgeführt werden kann. Typischerweise werden in neueren CNC Maschinen sogenannte Direktantriebe verwendet.

Das kontinuierliche Verfahren, teilweise auch als kontinuierliches Teilungsverfahren bezeichnet, basiert auf komplexeren Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten Antreiben mehrere Achsantriebe.

Das teilenden Verfahren hat den Nachteil, dass es im Vergleich zum kontinuierlichen Verfahren langsamer ist. Dabei fällt bei der industriellen Fertigung grösserer Chargen heute besonders die Zeit ins Gewicht, die für das Ausführen der Teilungsbewegung notwendig ist. Beim Fertigen eines Zahnrades mit n=20 Zähnen sind n=20 Zahnlücken einzeln zu bearbeiten und es sind n-1=19 Teilungsbewegungen notwendig. Rechnet man pro Teilungsbewegung 1 Sekunde, so vergehen alleine für das Teilen ca. 19 Sekunden.

Von daher liegt der Erfindung die Aufgabe zugrunde, einen Ansatz bereit zu stellen, der es ermöglicht das teilende Verfahren schneller zu machen.

Die Aufgabe wird erfindungsgemäss durch eine Vorrichtung gemäss Patentanspruch 1 und ein Verfahren gemäss Patentanspruch 11 gelöst.

Erfindungsgemäss ist diese Aufgabe dadurch gelöst, dass eine Vorrichtung zum Einsatz kommt, die mit einer Werkstückspindel zur Aufnahme eines Zahnrades, einer Werkzeugspindel zur Aufnahme eines Werkzeugs und mit mehreren Antrieben zum Bearbeiten des Zahnrades im Einzelteilverfahren ausgestattet ist. Bei diesem Einzelteilverfahren wird eine Zahnlücke des Zahnrades bearbeitet, dann eine Relativbewegung zwischen Werkzeug und Werkstück ausgeführt, um das Werkzeug aus der Zahnlücke zu entfernen, dann führt das Zahnrad eine Teilungsdrehung aus und das Werkzeug wird zugestellt, um eine weitere Zahnlücke zu bearbeiten. Gemäss Erfindung ist einer der Antriebe über eine Steuerung so ansteuerbar, dass die Relativbewegung eine Kippbewegung umfasst, durch die eine relative Winkeländerung zwischen dem Werkzeug und dem Zahnrad erzielt wird, wobei die Kippbewegung mit der Teilungsdrehung koordiniert ist.

Erfindungsgemäss wurde diese Aufgabe dadurch gelöst, dass zum Bearbeiten eines Zahnrades eine spezielle Vorrichtung eingesetzt wird, die eine Werkstückspindel zur Aufnahme des Zahnrades, eine Werkzeugspindel zur Aufnahme eines Werkzeugs und mehrere Antriebe zum Bearbeiten des Zahnrades mit dem Werkzeug umfasst. Die Vorrichtung führt die folgenden Schritte aus
- Bearbeiten einer Zahnlücke des Zahnrades mit dem Werkzeug durch Ausführen einer Bearbeitungsbewegung,
- Ausführen einer Relativbewegung zwischen dem Werkzeug und Werkstück, um das Werkzeug aus der Zahnlücke zu entfernen,
- Ausführen einer Teilungsdrehung, um das Zahnrad in eine andere Winkelposition zu überführen,
- Bearbeiten einer weiteren Zahnlücke des Zahnrades mit dem Werkzeug durch erneutes Ausführen einer Bearbeitungsbewegung.
Erfindungsgemäss umfasst dabei die Relativbewegung eine Kippbewegung, durch die eine relative Winkeländerung zwischen dem Werkzeug und dem Zahnrad erzielt wird, wobei die Kippbewegung mit der Teilungsdrehung koordiniert ist.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische Ansicht eines Teils einer konventionellen Vorrichtung;
- **FIG. 2A**: eine schematische Ansicht eines Teils einer erfindungsgemässen Vorrichtung in einer ersten Stellung;
- **FIG. 2B**: eine schematische Ansicht eines Teils einer erfindungsgemässen Vorrichtung in einer zweiten Stellung;
- **FIG. 3**: eine perspektivische Ansicht einer erfindungsgemässen Vorrichtung;
- **FIG. 4**: ein schematisches Blockdiagramm einer erfindungsgemässen Vorrichtung;
- **FIG. 5**: eine schematische Ansicht eines Teils einer weiteren erfindungsgemässen Vorrichtung.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

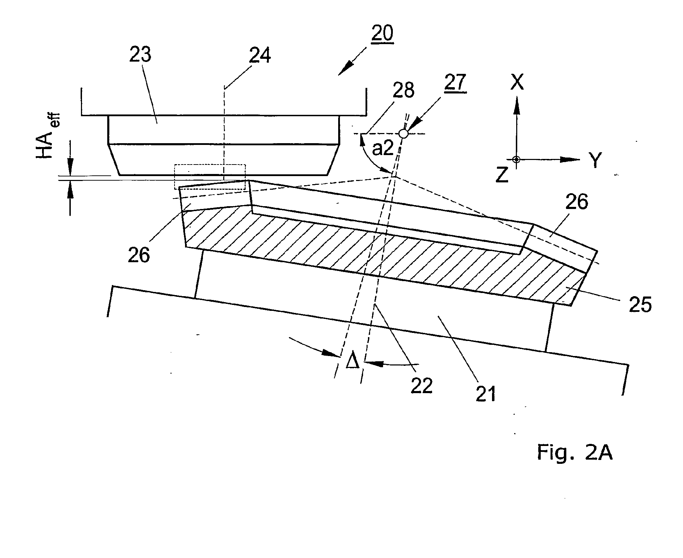

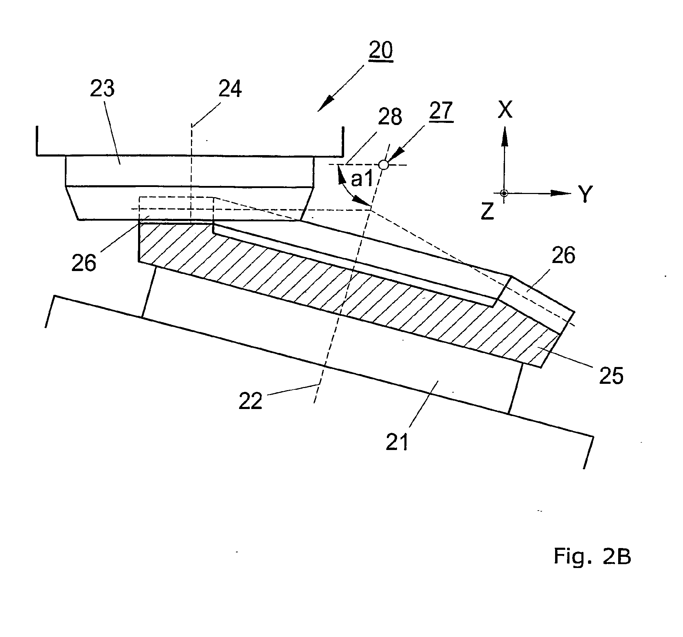

Eine erste Vorrichtung 20 gemäss Erfindung ist in den Figuren 2A und 2B gezeigt. Das Prinzip der Erfindung wird anhand dieser Figuren erläutert, die vom Aufbau her bewusst so angelegt sind, dass sie mit dem in Fig. 1 gezeigten konventionellen Ansatz einfacher vergleichbar sind. Es ist eine Vorrichtung 20 zum sogenannten Tauchschleifen gezeigt. Die Vorrichtung 20 weist eine Werkstückspindel 21 zur Aufnahme eines Zahnrades 25 auf. Weiterhin ist eine Werkzeugspindel (nicht gezeigt) zur Aufnahme eines Werkzeugs 23 vorgesehen. Die Werkzeugspindel definiert eine Achse 24 (A1-Achse), um die sich das Werkzeug 23 dreht. Es sind mehrere Antriebe zum Bearbeiten des Zahnrades im Einzelteilverfahren vorgesehen. Diese Antriebe sind in den Figuren 2A und 2B nicht gezeigt.

Es wird gemäss Erfindung nach einer Zustellbewegung eine Zahnlücke des Zahnrades 25 bearbeitet. Dieser Zustand, der Bearbeitungszustand genannt wird, ist in Fig. 2B gezeigt. Dann erfolgt eine Relativbewegung zwischen Werkzeug 23 und Werkstück 25, um das Werkzeug 23 aus der Zahnlücke zu entfernen. Gemäss Erfindung handelt es sich bei der Relativbewegung um eine Kippbewegung oder eine kombinierte Bewegung, die sich aus einer translatorischen Bewegung und einer Kippbewegung zusammensetzt. Durch die Relativbewegung wird eine relative Winkeländerung zwischen dem Werkzeug 23 und dem Zahnrad 25 erzielt. In Fig. 2A ist der Winkel **α2** zwischen einer Werkzeugebene 28, die sich parallel zur y-Achse erstreckt, und der Rotationsachse 22 der Werkstückspindel 21 grösser als der Winkel **α1** in Fig. 2B. Die Winkeländerung ist mit einem Δ gekennzeichnet und es gilt **α2** = **α1** + Δ. Die relative Winkeländerung erfolgt um einen Drehpunkt 27 (Drehung um C-Achse). Durch die Winkeländerung wird der Winkel **α1,** der beim Bearbeiten einer Zahnlücke zwischen der Werkzeugebene 28 und der Rotationsachse 22 der Werkstückspindel 21 eingestellt ist, vergrössert. Durch die Winkeländerung Δ ergibt sich eine effektive translatorische Verschiebung HA_{eff} des Werkzeugs 23 gegenüber dem Zahn 26 des Werkstücks 25, wie in Fig. 2A gezeigt. In Fig. 2A ist die Position des Zahns 26 vor der Winkeländerung durch eine gepunktete Linie angedeutet und der Zahn in dieser Lage mit 26' bezeichnet.

Gemäss Stand der Technik erfolgt bisher in keiner der Maschinen eine Winkeländerung beim Herausfahren des Werkzeugs 13 aus einer Zahnlücke. Konventionelle Maschinen sind auch von der Anordnung der Achsen nicht dazu ausgelegt eine solche Bewegung auszuführen. Das Werkzeug 13 muss also bei konventionellen Maschinen 10, siehe Fig. 1, eine translatorische Rückzugsbewegung machen, die der Zahnhöhe H plus einem Sicherheitsbetrag entspricht, um aus der Verzahnung ganz heraus zu fahren. Nur so kann bei konventionellen Maschinen 10 gewährleistet werden, dass es bei der darauffolgenden Teilungsdrehung um die Achsen 12 zu keiner Kollision mit einer Zahnflanke des Zahnes 16 und dem Werkzeug 13 kommt.

Gemäss Erfindung wird, bevor das Zahnrad 25 eine Teilungsdrehung um die Achse 22 ausführt und das Werkzeug 23 erneut zugestellt wird, die Winkeländerung Δ schlagartig ausgeführt. Wichtig ist, dass die entsprechende Kippbewegung mit der Teilungsdrehung koordiniert ist. Diese Koordination der Bewegungen kann bei Maschinen 20 mit mechanischem Antrieb mittels mechanischer Kopplungen erfolgen. Bei Maschinen 20, die mit einer CNC-Steuerung ausgestattet sind, erfolgt die Kopplung "elektronisch", d.h. durch geeignete Abstimmung der einzelnen Bewegungsabläufe aufeinander.

Wichtig ist, dass die Teilungsdrehung zeitlich verzögert aber zum Teil gleichzeitig mit der Kippbewegung ausgeführt wird. Dadurch, dass die beiden Bewegungen zumindest teilweise zeitgleich ablaufen, kann eine enorme Zeitersparnis erreicht werden.

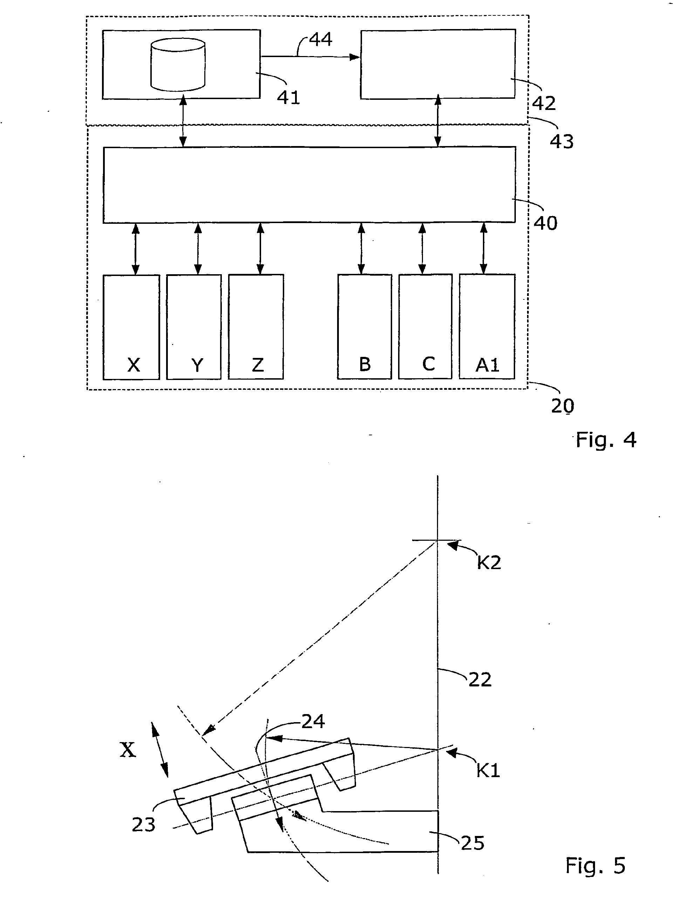

Falls die Maschinen 20 mit einer CNC-Steuerung versehen ist, erfolgt die Kopplung "elektronisch", d.h. durch geeignete Abstimmung der einzelnen Bewegungsabläufe aufeinander. Die elektronische Kopplung kann durch die Steuerung (zum Beispiel Steuerung 40 in Fig. 4) selbst, oder durch ein spezielles Softwaremodul (zum Beispiel Softwaremodul 42 in Fig. 4) bewerkstelligt werden.

Gemäss Erfindung sind relativ grosse Beschleunigungen notwendig, um die Kippbewegung so schnell ausführen zu können, dass nur wenig Zeit vergeht bis die Teilungsdrehung eingeleitet werden kann. Besonders bevorzugt sind daher Maschinen 20 mit CNC-Steuerung und Direktantrieben, da die Direktantriebe quasi schlagartig einen Steuerbefehl von der CNC-Steuerung in die gewünschte Kippbewegung umsetzen können.

Eine erfindungsgemässe Steuerung kann so programmiert werden, dass es zwischen dem Zahnrad 25 und dem momentan verwendeten Werkzeug 23 beim Ausführen der Teilungsdrehung zu keiner Kollision kommt. Beim Programmieren der Steuerung werden Angaben über die Dimensionen des Zahnrades 25 und des Werkzeugs 23 berücksichtigt.

Besonders bevorzugt ist eine Ausführungsform bei der die CNC-Steuerung ein Softwaremodul (zum Beispiel Softwaremodul 42 in Fig. 4) umfasst, das es ermöglicht im Zusammenhang mit dem Bestücken der Vorrichtung 20 mit einem zu bearbeitenden Zahnrad 25 und einem Werkzeug 23 eine sogenannte Kollisionsberechnung auszuführen, um eine Kollision zwischen Zähnen 26 und dem Werkzeug 23 zu vermeiden. Das Softwaremodul übernimmt zum Ausführen der Kollisionsberechnung vorzugsweise Daten, die in der Vorrichtung 20 im Zusammenhang mit dem Bearbeiten des Zahnrads 25 bereits vorgegeben sind. Aus diesen Daten wird dann im Dreidimensionalen unter Berücksichtigung der Bewegungsabläufe ermittelt, ob eine Kollisionsgefahr besteht.

Falls sich beim Durchführen der Kollisionsberechnung ergibt, dass eine Kollision erfolgen kann, so werden die Bewegungsabläufe entsprechend angepasst. Zum Beispiel kann die Kippbewegung, die gemäss Erfindung ausgeführt wird, mit einer schnelleren Rampe vorgenommen werden. Oder es kann die Teilungsdrehung etwas später einsetzen.

Eine erfindungsgemässe CNC-Steuerung ist so programmiert, dass die Teilungsdrehung des Zahnrades und die Relativbewegung (Kippbewegung oder kombinierte translatorische Bewegung und Kippbewegung) zwischen dem Zahnrad 25 und dem Werkzeug 23 koordiniert ablaufen. Darunter ist zu verstehen, dass die Bewegungsverläufe zeitlich aufeinander abgestimmt sind. So setzt zum Beispiel die Teilungsdrehung erst um eine Zeit Δt verzögert ein, nachdem die Kippbewegung eingeleitet wurde.

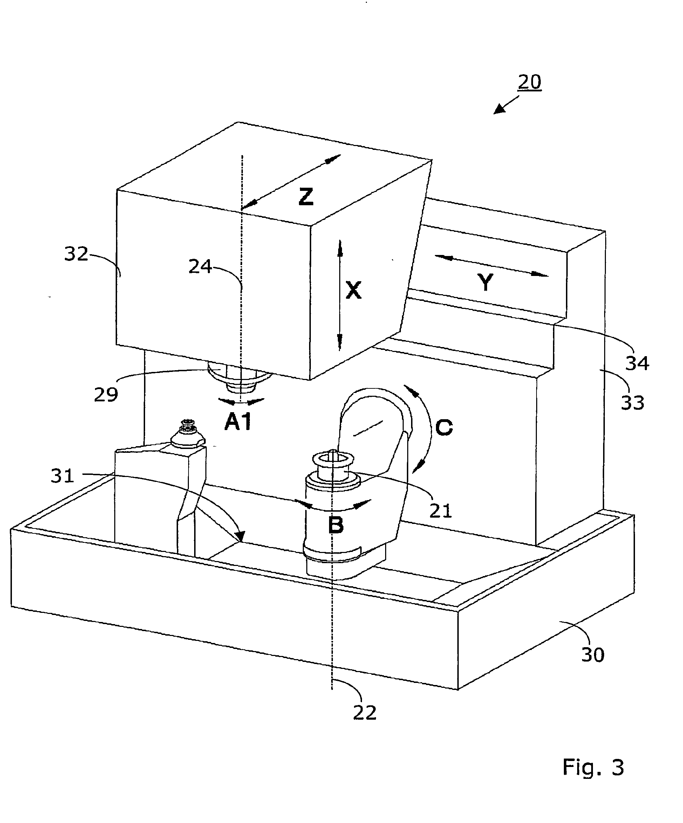

Eine besonders bevorzugte Ausführungsform der Erfindung ist in Fig. 3 dargestellt. Es ist eine neuartige Vorrichtung 20 mit einer Werkstückspindel 22 zur Aufnahme eines Zahnrades und einer Werkzeugspindel 29 zur Aufnahme eines Werkzeugs gezeigt. Die Vorrichtung 20 weist mehrere Antriebe zum Bearbeiten des Zahnrades im Einzelteilverfahren auf. Die Antriebe sind hinter Verkleidungen der Vorrichtung 20 verdeckt. Weiterhin umfasst die Vorrichtung 20 ein Maschinenbett 30 mit einem Auffangbereich 31 für Späne. An einem Ständer 33, der sich in der X-Y-Ebene erstreckt, ist ein Schlitten 32 vorgesehen, der entlang horizontal verlaufender Schienen 34 parallel zur Y-Achse verschiebbar ist. Der Schlitten 32 trägt die Werkzeugspindel 29 und kann translatorische Bewegungen in X und Z-Richtung ausführen.

Diese Art der in Fig. 3 gezeigten Anordnung unterscheidet sich von herkömmlichen Maschinen. Als ein wesentlicher Unterschied ist hervorzuheben, dass die Werkstückspindel 21 um eine C-Achse drehbar ist. Damit kann, anders als bei konventionellen Maschinen, eine Kippbewegung des Werkstücks relativ zu dem Werkzeug ausgeführt werden, um beide weit genug räumlich voneinander trennen zu können. Erst nach dem diese räumliche Trennung erfolgt ist, wie im Zusammenhang mit den Figuren 2A und 2B beschrieben, erfolgt die Teilungsdrehung des Werkstücks um die B-Achse. In der in Fig. 3 gezeigten Ausführungsform ist mindestens der C-Achsenantrieb ein von einer CNC-Steuerung gesteuerter Direktantrieb. Dieser Direktantrieb ermöglicht ein schlagartiges Drehen des Werkstücks.

Gemäss Erfindung wird auf der gezeigten Vorrichtung 20 eine Zahnlücke eines Zahnrades bearbeitet, das auf der Werkstückspindel 21 befestigt ist. Dann wird eine Relativbewegung zwischen Werkzeug und Werkstück ausgeführt, um das Werkzeug aus der Zahnlücke zu entfernen. Zu diesem Zweck wird einer der Antriebe über die CNC-Steuerung so angesteuert, dass die Relativbewegung eine Kippbewegung um die C-Achse umfasst, durch die eine relative Winkeländerung zwischen dem Werkzeug und dem Zahnrad erzielt wird. Das Zahnrad führt dann eine Teilungsdrehung um die B-Achse aus und das Werkzeug wird erneut zugestellt, um eine weitere Zahnlücke zu bearbeiten. Die beschriebene Kippbewegung ist über die CNC-Steuerung mit der Teilungsdrehung koordiniert, um Kollisionen zu vermeiden.

In Fig. 4 ist das entsprechende Blockdiagramm einer Vorrichtung 20 gemäss Erfindung gezeigt. Die Vorrichtung 20 weist sechs Antriebe X, Y, Z, B, C und A1 auf, die in Fig. 4 als Funktionsblöcke gezeigt sind. Jeder dieser Antriebe wird von eine CNC-Steuerung 40 her angesteuert. Im gezeigten Beispiel sind die Verbindungen zwischen der CNC-Steuerung 40 und den Antrieben durch Doppelpfeile dargestellt, was andeuten soll, dass die Antriebe Rückmeldungen an die Steuerung 40 geben können. Die Drehantriebe B, C, A1 können zum Beispiel Rückmeldung über das Drehmoment liefern, oder es können Winkelcoder eingesetzt werden, um die Winkelposition an die Steuerung 40 zu übermitteln. Die Antriebe X, Y, Z können zum Beispiel über Weg- oder Positionsgeber Information an die Steuerung zurück übermitteln. Die Steuerung 40 steht im gezeigten Ausführungsbeispiel mit einem Softwaremodul 41 in Verbindung. Dieses Softwaremodul 41 kann zum Beispiel den Zugriff auf einen Datenspeicher ermöglichen. Aus diesem Datenspeicher kann gespeicherte Information über die Beschaffenheit (Form, Material, etc.) eines zu bearbeitenden Werkstücks entnommen werden. In dem Datenspeicher können auch Angaben über das verwendete Werkzeug abgelegt sein. Hier wird durch einen Doppelpfeil zwischen der Steuerung 40 und dem Softwaremodul 41 angedeutet, dass die Steuerung in der Lage ist Information an das Softwaremodul 41 zurück zu geben.

Gemäss Erfindung kann ein Softwaremodul 42 vorgesehen sein, das es ermöglicht im Zusammenhang mit dem Bestücken der Vorrichtung 20 mit einem zu bearbeitenden Zahnrad 25 und einem Werkzeug 23 eine sogenannte Kollisionsberechnung auszuführen, um eine Kollision zwischen Zähnen 26 und dem Werkzeug 23 zu vermeiden. Das Softwaremodul 42 übernimmt zum Ausführen der Kollisionsberechnung vorzugsweise Daten vom Softwaremodul 41, die bereits vorgegeben sind, wie anhand des Pfeils 44 angedeutet. Aus diesen Daten ermittelt dann das Softwaremodul 42 im Dreidimensionalen unter Berücksichtigung der Bewegungsabläufe, ob eine Kollisionsgefahr besteht.
Besteht die Gefahr einer Kollision, so kann das Softwaremodul 42 der Steuerung 40 andere Parameter zum Ansteuern des Antriebs C (Kippbewegung) und des Antriebs B (Teilungsdrehung) vorgeben.

Es sei angemerkt, dass es sich bei der in Fig. 4 gezeigten Darstellung lediglich um ein Blockdiagramm handelt, das eine spezielle Ausführungsform darstellt. Es gibt auch andere Ansätze, um das Prinzip der Erfindung in eine CNC-Steuerung zu integrieren, oder um eine Steuerung durch Softwaremodule zu erweitern.

Die Funktionsblöcke 41 und 42 können zum Umfang einer Anwendungssoftware gehören, die typischerweise auf einem (externen) Rechner installiert ist und ausgeführt wird, der über eine Netzwerkverbindung mit der Steuerung 40 Verbunden ist. Die Steuerung 40 ist typischerweise in einer Vorrichtung 20 implementiert.

Es wird gemäss Erfindung ein Verfahren zum Bearbeiten eines Zahnrades mittels einer Vorrichtung bereit gestellt, die eine Werkstückspindel 21 zur Aufnahme des Zahnrades, eine Werkzeugspindel 29 zur Aufnahme eines Werkzeugs und mehrere Antriebe zum Bearbeiten des Zahnrades mit dem Werkzeug umfasst. Das Verfahren umfasst die folgenden Schritte:
- Bearbeiten einer Zahnlücke des Zahnrades mit dem Werkzeug durch Ausführen einer Bearbeitungsbewegung,
- Ausführen einer Relativbewegung zwischen dem Werkzeug und Werkstück, um das Werkzeug aus der Zahnlücke zu entfernen, wobei die Relativbewegung eine Kippbewegung um die C-Achse ist, durch die eine relative Winkeländerung zwischen dem Werkzeug und dem Zahnrad erzielt wird.
- Ausführen einer Teilungsdrehung um die B-Achse, um das Zahnrad in eine andere Winkelposition zu überführen, wobei die Kippbewegung mit der Teilungsdrehung koordiniert ist.
- Bearbeiten einer weiteren Zahnlücke des Zahnrades mit dem Werkzeug durch erneutes Ausführen einer Bearbeitungsbewegung.

In einer vorteilhaften Ausführung der erfindungsgemässen Maschine, die in Fig. 5 schematisch gezeigt ist, liegt die Schwenkachse C im Punkt der Teilkegelspitze K1 des Teilkegels des Werkstücks 25, bzw. in der Nähe dieses Punktes K1. Hierdurch wird erreicht, dass der überwiegende Anteil der Kippbewegung um den Punkt K1 in Richtung der X-Achse zeigt und somit das Entfernen des Werkzeugs 23 aus der Zahnlücke des Werkstücks 25 unterstützt. Falls die Schwenkachse C in einem Punkt K2 liegen würde, so würde das Werkzeug 23 eine Kippbewegung um diesen Punkt K2 ausführen, wie in Fig. 5 angedeutet. Bei einer Kippbewegung um den Punkt K2 ist der in X-Richtung weisende Anteil der Kippbewegung kleiner als bei dem vorher genannten Fall, wo die Schwenkachse C im oder nahe am Punkt K1 liegt. Durch geeignet Wahl der Lage der Schwenkachse C, wird bei gleichem Kippwinkel eine größere Bewegung in X-Richtung und eine kleinere Bewegung in Y-Richtung erreicht, wie in Fig. 5 schematisch dargestellt.

Bei Maschinen 20 mit mechanischen Antrieben kann die Erfindung auch eingesetzt werden, aber die Zeitersparnis, die erzielbar ist, ist geringer, da ein mechanischer Antrieb nur geringere Beschleunigungen zulässt. Ein Nachteil der Anwendung der Erfindung in einer Maschinen mit mechanischem Antrieb ist der Verschleiss, der durch zu schnelles Beschleunigen der Achsen entstehen kann.

Der Erfindung kann nicht nur wie beschrieben beim Tauchschleifen, sondern auch beim Fräsen oder Honen eingesetzt werden.

Besonders eignet sich die Erfindung zum Bearbeiten von Kegelradverzahnungen oder Stirnradkupplungen im Tauchverfahren.

## Patentansprüche

1. Vorrichtung (20) mit einer Werkstückspindel (21) zur Aufnahme eines Zahnrades (25), einer Werkzeugspindel (29) zur Aufnahme eines Werkzeugs (23) und mehreren Antrieben (X, Y, Z, B, C, A1) zum Bearbeiten des Zahnrades (25) im Einzelteilverfahren, wobei eine Zahnlücke des Zahnrades (25) bearbeitet, dann eine Relativbewegung zwischen Werkzeug (23) und Zahnrad (25) ausgeführt wird, um das Werkzeug (23) aus der Zahnlücke zu entfernen, das Zahnrad (25) eine Teilungsdrehung ausführt und das Werkzeug (23) zugestellt wird, um eine weitere Zahnlücke zu bearbeiten,
**dadurch gekennzeichnet, dass**
- einer der Antriebe (C) über eine Steuerung (40) so ansteuerbar ist, dass die Relativbewegung eine Kippbewegung umfasst, durch die eine relative Winkeländerung zwischen dem Werkzeug (23) und dem Zahnrad (25) erzielt wird, wobei die Kippbewegung mit der Teilungsdrehung koordiniert ist.

2. Die Vorrichtung (20) nach Anspruch 1, **dadurch gekennzeichnet, dass** mindestens einer der Antriebe (C) ein Direktantrieb ist, der die Kippbewegung ruckartig ausführt.

3. Die Vorrichtung (20) nach Anspruch 1 oder 2, **dadurch gekennzeichnet, dass** einer oder mehrere der Antriebe (X, Y) über eine Steuerung (40) so ansteuerbar sind, dass zusätzlich zu der Kippbewegung eine translatorische Relativbewegung ausführbar ist, durch die eine relative Abstandsänderung zwischen dem Werkzeug (23) und dem Zahnrad (25) erzielt wird.

4. Die Vorrichtung (20) nach Anspruch 1, 2 oder 3, **dadurch gekennzeichnet, dass** die Steuerung (40) so ausgelegt ist, dass zeitlich verzögert aber zum Teil gleichzeitig mit der Relativbewegung die Teilungsdrehung ausgeführt wird.

5. Die Vorrichtung (20) nach einem Ansprüche 1 bis 4, **dadurch gekennzeichnet, dass** die Steuerung (40) so programmierbar ist, dass es zwischen dem Zahnrad (25) und dem momentan verwendeten Werkzeug (23) beim Ausführen der Teilungsdrehung zu keiner Kollision kommt.

6. Die Vorrichtung (20) nach Anspruch 5, **dadurch gekennzeichnet, dass** die Steuerung (40) ein Softwaremodul (42) umfasst oder mit einem Softwaremodul (42) verbindbar ist, das es ermöglicht im Zusammenhang mit dem Bestücken der Vorrichtung (20) mit einem zu bearbeitenden Zahnrad (25) und einem Werkzeug (23) eine Kollisionsberechnung auszuführen, um die Kollision zu vermeiden.

7. Die Vorrichtung (20) nach einem Ansprüche 1 bis 6, **dadurch gekennzeichnet, dass** die Steuerung (40) so programmiert ist, dass die Teilungsdrehung des Zahnrades (25) und die Relativbewegung zwischen dem Zahnrad (25) und dem Werkzeug (23) koordiniert ablaufen.

8. Die Vorrichtung (20) nach einem Ansprüche 1 bis 7, **dadurch gekennzeichnet, dass** die Steuerung (40) so programmiert ist, dass zum Bearbeiten des Zahnrades (25) eine Bearbeitungsbewegung ausgeführt wird, bei der mindestens zwei der mehreren Antriebe (X, Y, Z, B, C, A1) koordinierte Bewegungen ausführen.

9. Die Vorrichtung (20) nach einem Ansprüche 1 bis 8, **dadurch gekennzeichnet, dass** es sich um eine Zahnradfräsmaschine oder um eine Zahnradschleifmaschine handelt, die vorzugsweise sechs Antriebe aufweist.

10. Die Vorrichtung (20) nach Anspruch 9, **dadurch gekennzeichnet, dass** bei der Maschine eine Schwenkachse (C) an einem Punkt (K1) vorgesehen ist, der sich im Bereich einer Teilkegelspitze des zu bearbeitenden Zahnrades (25) befindet, wobei die Kippbewegung um diese Schwenkachse (C) erfolgt.

11. Verfahren zum Bearbeiten eines Zahnrades (25) mittels einer Vorrichtung (20), die eine Werkstückspindel (21) zur Aufnahme des Zahnrades (25), eine Werkzeugspindel (29) zur Aufnahme eines Werkzeugs (23) und mehrere Antriebe (X, Y, Z, B, C, A1) zum Bearbeiten des Zahnrades (25) mit dem Werkzeug (23) umfasst, mit den folgenden Schritten
- Bearbeiten einer Zahnlücke des Zahnrades (25) mit dem Werkzeug (23) durch Ausführen einer Bearbeitungsbewegung,
- Ausführen einer Relativbewegung zwischen dem Werkzeug (23) und dem Zahnrad (25), um das Werkzeug (23) aus der Zahnlücke zu entfernen,
- Ausführen einer Teilungsdrehung, um das Zahnrad (25) in eine andere Winkelposition zu überführen,
- Bearbeiten einer weiteren Zahnlücke des Zahnrades (25) mit dem Werkzeug (23) durch erneutes Ausführen einer Bearbeitungsbewegung,
**dadurch gekennzeichnet, dass**
- die Relativbewegung eine Kippbewegung ist, durch die eine relative Winkeländerung zwischen dem Werkzeug (23) und dem Zahnrad (25) erzielt wird, wobei die Kippbewegung mit der Teilungsdrehung koordiniert ist.

12. Verfahren nach Anspruch 11, **dadurch gekennzeichnet, dass** zusätzlich zu der Kippbewegung eine kleine translatorische Relativbewegung ausgeführt wird, durch die eine relative Abstandsänderung zwischen dem Werkzeug (23) und dem Zahnrad (25) erzielt wird.

13. Verfahren nach Anspruch 11 oder 12, **dadurch gekennzeichnet, dass** zeitlich verzögert aber zum Teil gleichzeitig mit der Relativbewegung die Teilungsdrehung ausgeführt wird.

14. Verfahren nach einem der Ansprüche 11 bis 13, **dadurch gekennzeichnet, dass** durch die Vorrichtung oder einen Rechner ein Softwaremodul (42) ausgeführt wird, um im Zusammenhang mit dem Bestücken der Vorrichtung (20) mit einem zu bearbeitenden Zahnrad (25) und einem Werkzeug (23) eine Kollisionsberechnung durchführen zu können, um beim Ausführen der Teilungsdrehung eine Kollision des Werkzeugs (23) mit dem Zahnrad (25) zu vermeiden.

15. Verfahren nach einem der Ansprüche 11 bis 14, **dadurch gekennzeichnet, dass** die Kippbwegung um eine Schwenkachse (C) erfolgt, die an einem Punkt (K1) vorgesehen ist, der sich im Bereich einer Teilkegelspitze des zu bearbeitenden Zahnrades (25) befindet.

## Claims

1. Device (20) comprising a workpiece spindle (21) for receiving a gear wheel (25), a tool spindle (29) for receiving a tool (23) and several drives (X, Y, Z, B, C, A1) for machining the gear wheel (25) in the single division process, wherein a tooth gap in the gear wheel (25) is machined, then a relative movement between tool (23) and gear wheel (25) is carried out, in order to remove the tool (23) from the tooth gap, the gear wheel (25) carries out adivision rotation and the tool (23) is fed, in order to machine a further tooth gap, **characterized in that** one of the drives (C) can be activated via a control (40) in such a way that the relative movement includes a tilting movement, through which a relative modification in angle between the tool (23) and the gear wheel (25) is achieved, wherein the tilting movement is coordinated with the division rotation.

2. The device (20) according to claim 1, **characterized in that** at least one of the drives (C) is a direct drive which carries out the tilting movement jerkily.

3. The device (20) according to claim 1 or claim 2, **characterized in that** one or more of the drives (X, Y) can be activated via a control (40) so that it can be carried out, in addition to the tilting movement, a translatory relative movement by means of which a relative modification in distance between the tool (23) and the gear wheel (25) is achieved.

4. The device (20) according to claim 1, 2 or 3, **characterized in that** the control (40) is laid-out so, that the division rotation is carried out with time delay but partially simultaneous with the relative movement.

5. The device (20) according to one of claims 1 to 4, **characterized in that** the control (40) is programmable in such a way that between the gear wheel (25) and the tool (23) currently in use no collision occurs when carrying out the division rotation.

6. The device (20) according to claim 5, **characterized in that** the control means (40) comprises a software module (42) or is connectable to a software module (42), said software module (42) being able of carrying out, in conjunction with the fitting of the device (20) with a gear wheel (25) to be machined and a tool (23), a collision calculation in order to prevent the collision.

7. The device (20) according to one of claims 1 to 6, **characterized in that** the control (40) is programmed so that the division rotation of the gear wheel (25) and the relative movement between the gear wheel (25) and the tool (23) run coordinately.

8. The device (20) according to one of claims 1 to 7, **characterized in that** the control (40) is programmed so that for machining the gear wheel (25), a machining movement is carried out, in which at least two of the several drives (X, Y, Z, B, C, A1) carry out coordinated movements.

9. The device (20) according to one of claims 1 to 8, **characterized in that** the device is a gear milling machine or a gear grinding machine having preferably six drives.

10. The device (20) according to claim 9, **characterized in that** the machine has a swivel axis (C) at a point (K1) located in the region of a pitch cone apex of the gear wheel (25) to be machined, wherein the tilting movement is effected about this swivel axis (C).

11. Method for machining a gear wheel (25) by means of a device (20) comprising a workpiece spindle (21) for receiving the gear wheel (25), a tool spindle (29) for receiving a tool (23) and several drives (X, Y, Z, B, C, A1) for machining the gear wheel (25) using the tool (23), with the following steps:
- machining of a tooth gap of the gear wheel (25) using the tool (23) by carrying out a machining movement,
- carrying out of a relative movement between the tool (23) and the gear wheel (25), in order to remove the tool (23) from the tooth gap,
- carrying out of a division rotation, in order to transfer the gear wheel (25) into a different angular position,
- machining of a further tooth gap in the gear wheel (25) using the tool (23) by repeated carrying-out of a machining movement,
**characterized in that**
- the relative movement is a tilting movement, through which a relative modification in angle between the tool (23) and the gear wheel (25) is achieved, whereby the tilting movement is coordinated with the division rotation.

12. Method according to claim 11, **characterized in that** in addition to the tilting movement, a small translatory relative movement is carried out, through which a relative distance modification between the tool (23) and the gear wheel (25) is achieved.

13. Method according to claim 11 or 12, **characterized in that** the division rotation is carried out with time delay but partially simultaneous with the relative movement.

14. Method according to one of claims 11 to 13, **characterized in that** through the device or a computer runs a software module (42), in order to be able to carry out, in conjunction with the fitting of the device (20) with a gear wheel (25) to be machined and a tool (23), a collision calculation in order to prevent the tool (23) and the gear wheel (25) from colliding when the division rotation is carried out.

15. Method according to one of claims 11 to 14, **characterized in that** the tilting movement is carried out about a swivel axis (C) provided at a point (K1) located in the region of a pitch cone apex of the gear wheel (25) to be machined.

## Revendications

1. Dispositif (20) comportant une broche porte-pièce (21) destinée à recevoir une roue dentée (25), une broche porte-outil (29) destinée à recevoir un outil (23), et plusieurs entraînements (X, Y, Z, B, C, A1) permettant d'usiner la roue dentée (25) selon un procédé de division séparée, dans lequel un entredent de la roue dentée (25) est usiné, puis un déplacement relatif entre l'outil (23) et la roue dentée (25) est exécuté pour éloigner l'outil (23) hors de l'entredent, la roue dentée (25) exécute une rotation de pas et l'outil (23) est rapproché pour usiner un autre entredent,
**caractérisé en ce que**
- un des entraînements (C) peut être commandé via un dispositif de commande (40) de façon telle que le déplacement relatif comporte un déplacement de basculement, par lequel on atteint une modification angulaire relative entre l'outil (23) et la roue dentée (25), le déplacement de basculement étant coordonné à la rotation de pas.

2. Dispositif (20) selon la revendication 1, **caractérisé en ce qu'**au moins un des entraînements (C) est un entraînement direct qui exécute par saccades le déplacement de basculement.

3. Dispositif (20) selon la revendication 1 ou 2, **caractérisé en ce qu'**un ou plusieurs des entraînements (X, Y) peuvent être commandés via un dispositif de commande (40) de façon telle qu'en plus du déplacement de basculement, on peut exécuter un déplacement relatif de translation par lequel on atteint une modification d'écart relatif entre l'outil (23) et la roue dentée (25).

4. Dispositif (20) selon la revendication 1, 2 ou 3, **caractérisé en ce que** le dispositif de commande (40) est exécuté de façon telle que la rotation de pas est réalisée de façon retardée dans le temps mais se déroule en partie simultanément au déplacement relatif.

5. Dispositif (20) selon l'une des revendications 1 à 4, **caractérisé en ce que** le dispositif de commande (40) est programmable de façon telle qu'il ne se produit pas de collision entre la roue dentée (25) et l'outil actuellement utilisé (23) lors de l'exécution de la rotation de pas.

6. Dispositif (20) selon la revendication 5, **caractérisé en ce que** le dispositif de commande (40) comprend un module logiciel (42) ou peut être relié à un module logiciel (42) qui permet, en relation avec l'équipement du dispositif (20) avec une roue dentée à usiner (25) et un outil (23), d'exécuter un calcul de collision pour éviter la collision.

7. Dispositif (20) selon l'une des revendications 1 à 6, **caractérisé en ce que** le dispositif de commande (40) est programmé de façon telle que la rotation de pas de la roue dentée (25) et le déplacement relatif entre la roue dentée (25) et l'outil (23) se déroulent de façon coordonnée.

8. Dispositif (20) selon l'une des revendications 1 à 7, **caractérisé en ce que** le dispositif de commande (40) est programmé de façon telle que pour usiner la roue dentée (25), on exécute un déplacement d'usinage dans lequel au moins deux de plusieurs entraînements (X, Y, Z, B, C, A1) exécutent des déplacements coordonnés.

9. Dispositif (20) selon l'une des revendications 1 à 8, **caractérisé en ce qu'**il s'agit d'une machine à fraiser des engrenages ou d'une rectifieuse à engrenages qui présente de préférence six entraînements.

10. Dispositif (20) selon la revendication 9, **caractérisé en ce que**, dans le cas de la machine, un axe de pivotement (C) est prévu au niveau d'un point (K1) qui se trouve dans la zone d'un sommet du cône primitif de la roue dentée à usiner (25), le déplacement de basculement se faisant autour de l'axe de pivotement (C).

11. Procédé d'usinage d'une roue dentée (25) au moyen d'un dispositif (20) qui comprend une broche porte-pièce (21) destinée à recevoir une roue dentée (25), une broche porte-outil (29) destinée à recevoir un outil (23), et plusieurs entraînements (X, Y, Z, B, C, A1) permettant d'usiner la roue dentée (25) avec l'outil (23), comportant les étapes suivantes :
- usinage d'un entredent de la roue dentée (25) avec l'outil (23), par exécution d'un déplacement d'usinage,
- exécution d'un déplacement relatif entre l'outil (23) et la roue dentée (25), pour retirer l'outil (23) de l'entredent,
- exécution d'une rotation de pas pour transférer la roue dentée (25) dans une autre position angulaire,
- usinage d'un autre entredent de la roue dentée (25) avec l'outil (23) par nouvelle exécution d'un déplacement d'usinage,
**caractérisé en ce que**
- le déplacement relatif est un déplacement de basculement par lequel on atteint une modification angulaire relative entre l'outil (23) et la roue dentée (25), le déplacement de basculement étant coordonné à la rotation de pas.

12. Procédé selon la revendication 11, **caractérisé en ce qu'**en plus du déplacement de basculement est exécuté un petit déplacement relatif de translation, par lequel on atteint une modification d'écartement relatif entre l'outil (23) et la roue dentée (25).

13. Procédé selon la revendication 11 ou 12, **caractérisé en ce que** la rotation de pas est réalisée de façon décalée dans le temps mais partiellement simultanément au déplacement relatif.

14. Procédé selon l'une des revendications 11 à 13, **caractérisé en ce qu'**un module logiciel (42) est exécuté par le dispositif ou un ordinateur pour pouvoir réaliser, en relation avec l'équipement du dispositif (20) avec une roue dentée à usiner (25) et un outil (23), un calcul de collision permettant, lors de la réalisation de la rotation de pas, d'éviter une collision de l'outil (23) avec la roue dentée (25).

15. Procédé selon l'une des revendications 11 à 14, **caractérisé en ce que** le déplacement de pivotement se fait autour d'un axe de pivotement (C) qui est prévu au niveau d'un point (K1) qui se trouve dans la zone du sommet du cône primitif de la roue dentée (25) à usiner.
